Europäisches Patentamt

**European Patent Office**

Office européen des brevets

(19)

(11) Publication number: **0 047 150**
**B2**

(12)     NEW EUROPEAN PATENT SPECIFICATION

(45) Date of publication of the new patent specification :
19.10.88

(51) Int. Cl.⁴ : **C 07 F   9/38**

(21) Application number : **81303946.8**

(22) Date of filing : **28.08.81**

(54) Improvements relating to aminomethylenephosphonic acid solutions.

(30) Priority : **01.09.80 GB 8028124**

(43) Date of publication of application :
**10.03.82 Bulletin 82/10**

(45) Publication of the grant of the patent :
**13.06.84 Bulletin 84/24**

(45) Mention of the opposition decision :
**19.10.88 Bulletin 88/42**

(84) Designated contracting states :
**AT BE DE FR GB IT NL SE**

(56) References cited :
**EP-A- 0 009 839
EP-A- 0 125 766
DE-A- 2 132 511
DE-A- 2 214 500
GB-A- 1 201 132
GB-A- 1 294 464
GB-A- 1 348 439
US-A- 3 288 846
US-A- 3 796 749
US-A- 3 974 090**
Römpp's Chemielexikon Verlag Otto Albrecht Neu-
müller, 8. Auflage, BD. 1, 1979, 176
Inorganic Chemistry Vol. 6, page 939-42, 1967
The file contains technical information submitted
after the application was filed and not included in this
specification

(73) Proprietor : **Monsanto Europe S.A.
Avenue de Tervuren 270-272 Letter Box 1
B-1150 Brussels (BE)**

(72) Inventor : **Ledent, Michel Alex Omer
6, Rue d'Hastedon
B-5000 Namur (BE)**
Inventor : **May, Bronislav Henri
Courtensdreef 5
B-1900 Overijse (BE)**

(74) Representative : **Lunt, John Cooper et al
Monsanto Europe S.A. Patent Department Avenue de
Tervuren 270-272 Letter Box No 1
B-1150 Brussels (BE)**

EP 0 047 150 B2

## Description

This invention relates to aqueous solutions of aminomethylenephosphonic acid (hereinafter referred to as « AMP acid ») selected from diethylenetriaminepenta(methylenephosphonic acid), diethylenetriaminetetra(methylenephosphonic acid) and diethylenetriaminetri(methylenephosphonic acid) (hereinafter designated « D5A », « D4A » ou « D3A » respectively), having improved storage stability. The aminomethylenephosphonic acids are useful as sequestrants for metal ions.

Aqueous solutions of AMP acid are existing commercial products, and these usually contain a mixture of D5A, D4A and D3A, of which the principal component, providing at least 40 %, for example from 55 to 85 % and usually from 60 to 80 %, of the total weight of D5A, D4A and D3A, is D5A. The remainder is normally mostly D3A together with a small amount of D4A. Other phosphonic acids, for example hydroxymethylenephosphonic acid, may be present in trace amounts. The typical commercial product also contains small amounts of phosphorous acid and hydrochloric acid, the latter in an amount less than 10 % by weight, usually not more than 9 %, by weight of the solution. (In the present description and claims, all percentages are by weight e. g. grams per 100 grams of solution).

Conventionally the commercially aqueous solutions are described in terms of their concentration of « active phosphonic acid » which is measured by titrating the phosphonic acid groups in such solutions and converting the results, using predetermined constants, to the stoichiometrically equivalent concentration of D5A. The concentration of AMP acid, expressed in this way as active phosphonic acid, is normally from about 90 % to about 99 % and most commonly from about 94 % to about 98 % of the actual concentration of AMP acid.

To minimise handling and transportation costs, it is preferred to ship and store the AMP acid in relatively concentrated solutions, which may contain from 40 to 55 % of active phosphonic acid. A problem with such solutions, (although the problem also exists with more dilute solutions), is a tendency for solid AMP acid to crystallize, particularly if the solutions are subjected to sudden changes in environment within a storage temperature range which would be expected to be perhaps — 5 °C, to 30 °C, and usually 15-25 °C, but which exceptionally may be as low as for example — 20 °C or as high as for example 50 °C.

It might be supposed that solubility of the AMP acid would be suppressed by the common ion effect of the hydrochloric acid in the solution, and that a reduction in the concentration of the hydrochloric acid might provide an improvement. Alternatively, it might be supposed that an increase in the concentration of hydrochloric acid in the solution or the addition of some other mineral acid to the solution, might aggravate the problem. In fact, this result is obtained in the case of other aminopolymethylenephosphonic acids such as e. g., nitrilotri(methylenephosphonic acid) as the limits of its solubility in aqueous solutions at ordinary temperatures (e. g. 25 °C) is driven to very low levels by the presence of HCl in concentrations above 10 % of such solutions.

Surprisingly, it has been found that solutions of AMP acid do not show the behaviour which would be expected from such considerations, and that solutions containing higher concentrations of hydrochloric acid than the usual solutions referred to above, i. e. solutions containing 10 % or more of hydrochloric acid have improved stabilities. Other mineral acids have been found to have a similar effect.

Accordingly, the present invention provides aqueous solutions of AMP acid having improved stability against crystallisation of the AMP acid, and a method for stabilising aqueous solutions of AMP acid against such crystallisation.

An aqueous solution of the invention comprises an AMP acid selected from D5A, D4A, D3A and mixtures thereof the concentration of AMP acid in the solution, expressed as the stoichiometrically equivalent amount of D5A, being at least 10 %, and a non-oxidising mineral acid, the non-oxidising mineral acid being present in an amount sufficient to inhibit crystallisation of AMP acid from the solution at ambient temperatures, being an amount of HCl which is at least 10 % by weight of the solution, or an equivalent amount of at least one other non-oxidising mineral acid or of a mixture of HCl with at least one other non-oxidising mineral acid.

This amount of acid is equivalent to about 0.27 gram-equivalents of non-oxidising mineral acid per 100 grams of solution, the gram-equivalent of an acid being the weight in grams of the acid which contains one gram of replaceable hydrogen. Irrespective of what may be the actual degree of ionisation of the mineral acid in a solution of the invention, the gram-equivalent weight of hydrochloric acid is understood as being the same as its gram-molecular weight, the gram-equivalent weight of sulphuric acid is understood as being half its gram-molecular weight, the gram-equivalent weight of phosphoric acid is understood as being one-third its gram-molecular weight, and so on.

The method of the invention is a method of stabilising an aqueous solution of an AMP acid selected from D5A, D4A, D3A and mixtures thereof against crystallisation of the AMP acid, which comprises adding non-oxidising mineral acid to an aqueous solution of a said AMP acid to provide an amount of non-oxidising mineral acid in the solution sufficient to inhibit crystallisation of AMP acid therefrom at ambient temperature, the said amount being at least 0.27 gram-equivalents of mineral acid per 100 grams of solution and the concentration of AMP acid in the stabilised solution, expressed as the stoichiometrically equivalent amount of D5A, being at least 10 %.

As used herein, the term « non-oxidising mineral acid » refers to a mineral acid which does not significantly oxidize D5A, D4A or D3A in an aqueous solution at 25 °C. The most preferred of these is hydrochloric acid but others, e. g. sulphuric, phosphoric, phosphorous, or hydrobromic, as well as mixtures of two or more of such mineral acids may be used satisfactorily.

The mineral acid can be added to the solution by any suitable procedure after the reaction employed in production of the AMP acid. For instance, when such a mineral acid is present, following that reaction, in an amount insufficient for good stabilization of an aqueous solution containing the AMP acid product, more of that mineral acid and/or other such mineral acids may be subsquently added to reach the total amount required for such stabilization.

It is often convenient to add the extra mineral acid in the form of an aqueous solution of the acid, for example hydrochloric acid as a 32 % aqueous solution or sulphuric acid as a 50 % aqueous solution.

Such a procedure involves the addition of water as well as of acid, and for the production of concentrated AMP acid solutions, the evaporation of at least an equivalent amount of water from the original AMP acid solution prior to the addition of the mineral acid solution is a preferred procedure.

The invention has its principal application in the stabilisation of commercial solutions of AMP acid in concentrated or diluted form, in which, as indicated above, AMP acid is present as mixtures of D5A, D4A and D3A. In practice, the solutions usually contain at least 10 % of active phosphonic acid, but not more than 60 % and more usually not more than 55 % of active phosphonic acid.

The minimum and optimum amounts of non-oxidising mineral acid normally required for good stabilisation vary with the particular mineral acid or mixture of mineral acids, used, and with the concentration of AMP acid. There may also be some variation from batch-to-batch of commercial AMP acid due possibly to slight variations in the proportions of D5A, D4A and D3A in the mixture and in the amounts of impurities present.

The preferred mineral acid in the solutions of the invention is hydrochloric acid. When this is used as the sole non-oxidising mineral acid, the stabilisation of solutions containing up to about 45 % of AMP acid usually requires the presence of at least 14.8 %, and preferably at least 15 % of HCl ; the optimum concentration of HCl is usually in the range 15 to 20 %, and often in the range 15 to 17 %.

Variations in the minimum amount of HCl required for stabilisation of different batches of AMP acid of approximately the same active phosphonic acid content are most apparent with solutions containing about 50 %, for example from 48 to 51 % active phosphonic acid (which typically corresponds to about 50 to 53 % of AMP acid). It is usually found that a concentration of at least 11.5 %, for example 12-13 % HCl is required, and for some batches the necessary minimum concentration of HCl may be higher, for example 14 or 15 %.

At AMP acid concentrations above 50 %, the minimum concentration of HCl required for stabilisation is usually at least 11.5 % and more usually 12-13 %.

For all these solutions, the concentration of HCl in practice will normally not exceed 20 %, and is preferably not greater than 17 %, although higher concentrations are within the scope of the invention. Typically, therefore, solutions having hydrochloric acid as the sole non-oxidising mineral acid and containing from 50 to 60 % of AMP acid contain 11.5 to 17 % of HCl ; and within this range, solutions containing 50 to 55 % of AMP acid may contain from 12 to 17 % of HCl.

When mixtures of sulphuric acid and hydrochloric acid are employed, stabilisation usually requires the presence of at least 0.40 total gram equivalents of mineral acid per 100 grams of solution. However, concentrations of mixed acid as low as this figure, or even as low as 0.45 total gram equivalents per 100 grams of solution, are in general effective only in concentrated solutions containing 45 % or more AMP acid. Solutions that are more dilute with respect to AMP acid require a higher minimum combined HCl/$H_2SO_4$ content for their stabilisation. At about 30 % AMP acid, the minimum is usualy about 0.5 total gram equivalents of mineral acid per 100 grams of solution. Thus for solutions containing about 30 % or more of AMP acid, a preferred total gram equivalents of HCl/$H_2SO_4$ per 100 grams of solution is 0.41 to 0.55. At about 10 % of AMP acid, the minimum combined HCl/$H_2SO_4$ content required for stabilisation is usually about 0.6 total gram equivalent of mineral acid per 100 grams of solution.

The relative proportions of HCl and $H_2SO_4$ in a mixture of HCl and $H_2SO_4$ used to stabilise AMP acid solutions in accordance with the invention may also be a further factor in determining the minimum total mineral acid concentration required. There are indications that the minimum will decrease as the proportion of HCl in the mixture (of an gram-equivalent basis) increases.

In practice, the mineral acid content of solutions stabilised with mixtures of HCl and $H_2SO_4$ will normally not exceed the required minimum by more than 0.2 gram equivalents total mineral acid per 100 grams of solution, but larger amounts than this, for example up to 0.9 gram equivalents total per 100 grams of solution, may be present.

Stabilisation by the addition of phosphoric or phosphorous acids to a solution of AMP acids containing 5 % or less of HCl requires the use of relatively large amounts of $H_3PO_4$ or $H_3PO_3$. For example, as shown by the data set out in the tables below, the stable solutions are those that contain at least about 30 % by weight of $H_3PO_4$ or at least about 40 % by weight of $H_3PO_3$.

It will be appreciated that, because of the number of variables in the system, to specify minimum and optimum amounts of stabilising mineral acid for all conceivable combinations of variables is impossible. However the procedure for assessing solution stability as set out below is straightforward, and its performance in order to determine the amounts of mineral acid required to achieve the object of the invention in any particular instance is well within the capability of the person skilled in the art.

As a generality, however, the solutions, especially those containing at least 30 %, for example from 30 to 55 %, of active phosphonic acid, will usually be stable provided they contain more than 0.40, for example from 0.41 to 0.55 gram equivalents of non-oxidising mineral acid, per 100 grams of solution. In some instances, the minimum concentration of mineral acid required for stability will be towards the upper end of this range. Moreover, solutions containing about 50 % or more of active phosphonic acid are in some instances stabilised by the presence of 0.40 gram equivalents of mineral acid or less, provided they contain at least 10 %, preferably at least 12 % of HCl.

In addition to the aforementioned AMP acid and non-oxidizing mineral acids, the compositions claimed herein can include various other constituents which do not prevent substantial realization of advantages of this invention. For example, such other constituents may include other metal sequestrants, e. g. other polymethylenephosphonic acids such as nitrilotri(methylenephosphonic acid), ethylenediaminetetra(methylenephosphonic acid), hexamethylenediaminetetra(methylenephosphonic acid) and triethylenetetraminehexa(methylenephosphonic acid).

The invention is illustrated by the following Examples.

Examples 1-34

Solutions 1-34 containing various concentrations of active phosphonic acid and HCl are prepared by additions of 32 % HCl solution or 32 % HCl solution and water to samples of a commercially available product which is an aqueous solution containing 6.86 % HCl and 50.4 % of active phosphonic acid (corresponding to 52 % AMP acid of which about 70 % is D5A, 28 % is D3A and 2 % is D4A).

After thorough mixing, each solution is seeded with crystals of pure D5A and stored at 20 °C. A solution is regarded as stabilised in accordance with the invention if the seeds dissolve at 20 °C to give a clear solution which remains clear at 20 °C for at least 24 hours after seeding.

The observations are shown below.

Total HCl content

| Solution No. | % Active phosphonic acid content | % | Gm. Eqs./ 100 Gms. Soln. | Observations |
|---|---|---|---|---|
| 1 | 35 | 15.6 | 0.43 | Seeds dissolved after 1 minute; solution remains clear on storage. |
| 2 | 35 | 13.8 | 0.38 | Solution slightly turbid. |
| 3 | 35 | 12.0 | 0.33 | Turbid solution after seeding followed by slight precipitation within 3 hours. Precipitate sticks to the bottom. |
| 4 | 35 | 10.2 | 0.28 | Same as solution No. 3. |
| 5 | 35 | 8.4 | 0.23 | Turbid solution after seeding. Considerable deposits after 2 days storage. |
| 6 | 30 | 18.51 | 0.51 | Seeds dissolved quickly. Clear solution. |
| 7 | 30 | 14.91 | 0.41 | Same as solution No. 6. |

4

(Continued)

Total HCl content

| Solution No. | % Active phosphonic acid content | % | Gm. Eqs./ 100 Gms. Soln. | Observations |
|---|---|---|---|---|
| 8 | 30 | 11.31 | 0.31 | Turbid solution after seeding. Precipitation on storage. |
| 9 | 30 | 7.71 | 0.21 | Considerable precipitation after 2 days storage. |
| 10 | 30 | 5.91 | 0.16 | Same as solution No. 9. |
| 11 | 30 | 4.11 | 0.11 | Same as solution No. 9. |
| 12 | 25 | 21.43 | 0.59 | Seeds dissolved quickly. Clear solution after 2 minutes. |
| 13 | 25 | 17.83 | 0.49 | Same as solution No. 12. |
| 14 | 25 | 16.03 | 0.44 | Same as solution No. 12. |
| 15 | 25 | 14.23 | 0.39 | Turbid solution after seeding. Very slight sedimentation on storage. |
| 16 | 25 | 10.63 | 0.29 | Precipitation on storage. |
| 17 | 20 | 24.34 | 0.67 | Clear solution after seeding. Solution remains stable on storage. |
| 18 | 20 | 20.74 | 0.57 | Clear solution after seeding. Stable solution. |
| 19 | 20 | 17.14 | 0.47 | Seeds dissolved quickly. Clear solution on storage. |
| 20 | 20 | 15.34 | 0.42 | Same as solution No. 19 |
| 21 | 20 | 13.54 | 0.37 | Cloudy solution after seeding. Slight sedimentation after 3 days. |
| 22 | 20 | 9.94 | 0.27 | Non-stable solution. Precipitation after seeding. |

(Continued)

Total HCl content

| Solution No. | % Active phosphonic acid content | % | Gm. Eqs./ 100 Gms. Soln. | Observations |
|---|---|---|---|---|
| 23 | 15 | 27.26 | 0.75 | Stable clear solution. |
| 24 | 15 | 23.7 | 0.65 | Stable clear solution. |
| 25 | 15 | 20.0 | 0.55 | Stable clear solution. |
| 26 | 15 | 16.46 | 0.45 | Stable clear solution. |
| 27 | 15 | 14.6 | 0.40 | Cloudy solution on.mixing. Very slight sedimentation. |
| 28 | 15 | 12.86 | 0.35 | Cloudy solution. Slight sedimentation. |
| 29 | 10 | 30.17 | 0.83 | Stable clear solution. |
| 30 | 10 | 26.6 | 0.73 | Stable clear solution. |
| 31 | 10 | 23.0 | 0.63 | Stable clear solution. |
| 32 | 10 | 19.37 | 0.53 | Stable clear solution. |
| 33 | 10 | 15.77 | 0.43 | Stable clear solution. |
| 34 | 10 | 12.17 | 0.33 | Cloudy solution on mixing. Sedimentation on storage. |

From the data above it can be seen that stable solutions are obtained if the total HCl content is greater than 0.40 gram equivalents per 100 grams of solution, and that this minimum mineral acid concentration is required irrespective of the concentration of active phosphonic acid over the range 10 %-35 % active phosphonic acid.

### Examples 35–42

To prepare Solutions Nos. 35–42, 98 % $H_2SO_4$ was added to solutions containing various concentrations of active phosphonic acid obtained by diluting a commercial product containing 50 % of active phosphonic acid (corresponding to about 51.7 % AMP acid). After thorough mixing, each solution is seeded with crystals of pure D5A and stored at 20 °C. Observations on the stabilities of the solutions are shown in the table.

(See Table page 7)

# 0 047 150

Mineral acid content

| Solution No. | % Active phosphonic acid content | % HCl | % $H_2SO_4$ | Total Gm. Eqs./ 100 Gms. Soln. | Observations |
|---|---|---|---|---|---|
| 35 | 30 | 4.44 | 30 | 0.73 | Stable clear solution. |
| 36 | 30 | 4.44 | 20 | 0.53 | Stable clear solution. |
| 37 | 30 | 4.44 | 15 | 0.43 | Cloudy solution on mixing; sedimentation on storage. |
| 38 | 30 | 4.44 | 10 | 0.33 | Same as solution 37. |
| 39 | 10 | 1.47 | 50 | 1.06 | Stable clear solution. |
| 40 | 10 | 1.47 | 30 | 0.65 | Stable clear solution. |
| 41 | 10 | 1.47 | 25 | 0.55 | Slight sedimentation on storage. |
| 42 | 10 | 1.47 | 20 | 0.45 | Cloudy solution on mixing. Precipitation on storage. |

From these results, it can be concluded that to stabilise solutions containing 30 % active phosphonic acid and the indicated amount of HCl, the addition of $H_2SO_4$ to give a total mineral acid concentration of about 0.5 gram equivalents per 100 grams of solution is required. For solutions containing 10 % active phosphonic acid, the addition of $H_2SO_4$ to give a total mineral acid content of about 0.6 gram equivalents of acid per 100 grams of solution appears to be required.

## Examples 43 and 44

Solutions 43 and 44 were prepared similarly to Solutions 35-42, but using glacial phosphoric acid instead of $H_2SO_4$.

Mineral acid content

| Solution No. | % Active phosphonic acid content | % HCl | % $H_3PO_4$ | Total Gm. Eqs./ 100 Gms. Soln. | Observations |
|---|---|---|---|---|---|
| 43 | 30 | 4.44 | 34.4 | 1.17 | Stable clear solution. |
| 44 | 30 | 4.44 | 20.3 | 0.74 | Cloudy solution on mixing. |

## Examples 45-48

Solutions 45-48 were prepared similarly to Solutions 35-42, but using $H_3PO_4$ instead of $H_2SO_4$.

7

### Mineral acid content

| Solution No. | % Active phosphonic acid content | % HCl | % H$_3$PO$_3$ | Total Gm. Eqs./ 100 Gms. Soln. | Observations |
|---|---|---|---|---|---|
| 45 | 20 | 3.2 | 42 | 1.63 | Clear solution after seeding. |
| 46 | 10 | 1.6 | 56 | 2.09 | Clear solution after seeding. |
| 47 | 10 | 1.6 | 49 | 1.84 | Clear solution after seeding. |
| 48 | 10 | 1.6 | 35 | 1.32 | Cloudy solution on mixing. |

### Examples 49-51

The solutions of the following Examples were prepared by concentrating a sample of the commercially available product used in Examples 1-34 to a 70 % active acid content, and adding 32 % HCl solution or 32 % HCl solution and water to portions of the concentrated solution. After thorough mixing, each solution was seeded with crystals of pure D5A and stored at 20 °C.

### Total HCl content

| Solution No. | % Active phosphonic acid content | % | Gm. Eqs./ 100 Gms. Soln. | Observations |
|---|---|---|---|---|
| 49 | 50 | 15.0 | 0.41 | Clear solution after seeding; solution remains clear on storage. |
| 50 | 50 | 13.6 | 0.37 | Solution slightly turbid. |
| 51 | 50 | 12.0 | 0.33 | Turbid solution; precipitation within 3 hours. |

### Examples 52-65

The solutions of the following Examples were prepared by concentrating a different sample of approx. 50 % active acid content commercial product from that used in Examples 49-51 to about 70 % active acid, and adding 32 % HCl solution, 50 % H$_2$SO$_4$ solution, water, or combinations of these to portions of the concentrated solution. After thorough mixing, each solution was seeded with crystals of pure D5A and stored at 20 °C.

### Mineral acid content

| Solution No. | % Active phosphonic acid content | % HCl | % H$_2$SO$_4$ | Total Gm. Eqs./ 100 Gms. Soln. | Observations |
|---|---|---|---|---|---|
| 52 | 50 | 6.44 | 14.79 | 0.48 | Clear |
| 53 | 50 | 5.44 | 9.58 | 0.38 | Cloudy |
| 54 | 50 | 12.5 | 6.34 | 0.47 | Clear |
| 55 | 50 | 12.5 | 2.82 | 0.40 | Clear |
| 56 | 50 | 12.5 | — | 0.34 | Clear |
| 57 | 50 | 11.0 | — | 0.30 | Cloudy |
| 58 | 50 | 10.0 | — | 0.27 | Precipitate |

8

(Continued)

Mineral acid content

| Solution No. | % Active phosphonic acid content | % HCl | % H₂SO₄ | Total Gm. Eqs./ 100 Gms. Soln. | Observations |
|---|---|---|---|---|---|
| 59 | 52 | 10 | — | 0.27 | Cloudy |
| 60 | 52 | 11 | — | 0.30 | Cloudy |
| 61 | 52 | 12.3 | — | 0.34 | Clear |
| 62 | 55 | 7.08 | 11.24 | 0.42 | Clear |
| 63 | 55 | 12.3 | — | 0.34 | Clear |
| 64 | 57 | 12.4 | — | 0.34 | Clear |
| 65 | 60 | 12 | — | 0.33 | Clear |

Various conclusions can be drawn from comparison of the results of Examples 52-65 with those of earlier Examples.

Comparison with Examples 35-42 shows that when using mixtures of HCl and H₂SO₄, the more concentrated active phosphonic acid solutions Nos. 52-55 and 62 require less total HCl plus H₂SO₄ for stabilisation than the more dilute solutions Nos. 35-42.

Comparison of Solutions 56, 57 and 58 with Solutions 49, 50 and 51 shows that variations from batch-to-batch of AMP acid are liable to occur in respect of the minimum concentration of mineral acid required to stabilise the solution in accordance with the invention.

**Claims**

1. An aqueous solution comprising an aminomethylenephosphonic acid selected from diethylenetriaminepenta(methylenephosphonic acid), diethylenetriaminetetra(methylenephosphonic acid), diethylenetriaminetri(methylenephosphonic acid) and mixtures thereof and a non-oxidising mineral acid, the concentration of aminomethylenephosphonic acid in the solution, expressed as the stoichiometrically equivalent amount of diethylenetriaminepenta(methylenephosphonic acid), being at least 10 %, characterised in that the mineral acid is present in an amount sufficient to inhibit crystallisation of aminomethylenephosphonic acid from the solution at ambient temperature, being an amount of hydrochloric acid which is at least 10 % by weight of the solution or an equivalent amount of at least one other non-oxidising mineral acid or of a mixture of hydrochloric acid with one or more other non-oxidising mineral acids.

2. A solution according to claim 1 wherein the aminomethylenephosphonic acid is a mixture of diethylenetriaminepenta(methylenephosphonic acid), diethylenetriaminetetra(methylenephosphonic acid) and diethylenetriaminetri(methylenephosphonic acid) containing from 55 to 85 %, based on the weight of the mixture, of diethylenetriaminepenta(methylenephosphonic acid).

3. A solution according to claim 2 which contains more than 0.4 gram equivalents of mineral acid per 100 grams of solution.

4. A solution according to claim 3 which contains an amount of aminomethylenephosphonic acid, expressed as the stoichiometric equivalent amount of diethylenetriaminepenta(methylenephosphonic acid), of from 30 to 55 % and from 0.41 to 0.55 gram equivalents of mineral acid per 100 grams of solution.

5. A solution according to any of claims 1 to 4 wherein the mineral acid is hydrochloric acid.

6. A solution according to claim 3 wherein the mineral acid is a mixture of hydrochloric acid and sulphuric acid.

7. A solution according to claim 2 wherein the sole non-oxidising mineral acid is hydrochloric acid and which contains from 50 to 60 % of aminomethylenephosphonic acid and from 11.5 to 17 % of HCl.

8. A solution according to claim 7 which contains from 50 to 55 % of aminomethylenephosphonic acid and from 12 to 17 % of HCl.

9. A method for stabilising an aqueous solution of aminomethylenephosphonic acid selected from diethylenetriaminepenta(methylenephosphonic acid), diethylenetriaminetetra(methylenephosphonic acid), diethylenetriaminetri(methylenephosphonic acid) and mixtures thereof against crystallisation of the aminomethylenephosphonic acid, which comprises adding non-oxidising mineral acid to the solution until the amount of said mineral acid in the stabilised solution is at least 0.27 gram equivalents of mineral acid per 100 grams of solution and is sufficient to inhibit the said crystallisation at ambient temperature and the concentration of aminomethylenephosphonic acid in the stabilised solution, expressed as the stoichiometrically equivalent amount of diethylenetriaminepenta(methylenephosphonic acid), being at least 10 %.

10. A method according to claim 9 in which the aminomethylenephosphonic acid is a mixture of diethylenetriaminepenta(methylenephosphonic acid), diethylenetriaminetetra(methylenephosphonic acid), and diethylenetriaminetri(methylenephosphonic acid) containing from 55 to 85 %, based on the weight of the mixture, of diethylenetriaminepenta(methylenephosphonic acid).

11. A method according to claim 10 in which the stabilised solution contains an amount of aminomethylenephosphonic acid, expressed as the stoichiometric equivalent amount of diethylenetriaminepenta(methylenephosphonic acid), of from 30 to 55 % and from 0.41 to 0.55 gram equivalents of mineral acid per 100 grams of solution.

12. A method according to either of claims 10 and 11 wherein the mineral acid is hydrochloric acid.

13. A method according to claim 11 wherein the mineral acid is a mixture of hydrochloric acid and sulphuric acid.

14. A method according to claim 10 wherein the stabilised solution contains hydrochloric acid as the sole non-oxidising mineral acid, from 50 % to 60 % of AMP acid and from 11.5 to 17 % of HCl.


### Patentansprüche

1. Wässerige Lösung enthaltend eine Aminomethylenphosphonsäure ausgewählt unter Diäthylentriaminpenta(methylenphosphonsäure), Diäthylentriamintetra(methylenphosphonsäure), Diäthylentriamintri(methylenphosphonsäure) und Mischungen hievon und eine nicht-oxidierende Mineralsäure, wobei die Konzentration der Aminomethylenphosphonsäure in der Lösung, ausgedrückt als der stöchiometrisch äquivalente Anteil der Diäthylentriaminpenta(methylenphosphonsäure), mindestens 10 % beträgt, dadurch gekennzeichnet, daß die Mineralsäure in einem Anteil vorhanden ist, der ausreicht, Kristallisation von Aminomethylenphosphonsäure aus der Lösung bei Umgebungstemperatur zu hemmen, und der ein Anteil an Salzsäure ist, welcher mindestens 10 %-Masse der Lösung oder ein äquivalenter Anteil von mindestens einer anderen nicht-oxidierenden Mineralsäure oder einer Mischung von Salzsäure mit einer oder mehreren anderen nicht-oxidierenden Mineralsäuren ist.

2. Lösung gemäß Anspruch 1, wobei die Aminomethylenphosphonsäure eine Mischung von Diäthylentriaminpenta(methylenphosphonsäure), Diäthylentriamintetra(methylenphosphonsäure) und Diäthylentriamintri(methylenphosphonsäure) mit einem Gehalt von 55 bis 85 %, bezogen auf die Masse der Mischung, Diäthylentriaminpenta(methylenphosphonsäure) ist.

3. Lösung gemäß Anspruch 2, die mehr als 0,4 Grammäquivalente Mineralsäure pro 100 g Lösung enthält.

4. Lösung gemäß Anspruch 3, die einen Anteil an Aminomethylenphosphonsäure, ausgedrückt als der stöchiometrische äquivalente Anteil an Diäthylentriaminpenta(methylenphosphonsäure), von 30 bis 55 % und 0,41 bis 0,55 Grammäquivalente Mineralsäure pro 100 g Lösung enthält.

5. Lösung gemäß einem der Ansprüche 1 bis 4, worin die Mineralsäure Salzsäure ist.

6. Lösung gemäß Anspruch 3, worin die Mineralsäure eine Mischung von Salz- und Schwefelsäure ist.

7. Lösung gemäß Anspruch 2, worin die einzige nicht-oxidierende Mineralsäure Salzsäure ist und die 50 bis 60 % Aminomethylenphosphonsäure und 11,5 bis 17 % HCl enthält.

8. Lösung gemäß Anspruch 7, die 50 bis 55 % Aminomethylenphosphonsäure und 12 bis 17 % HCl enthält.

9. Verfahren zum Stabilisieren einer wässerigen Lösung von Aminomethylenphosphonsäure ausgewählt unter Diäthylentriaminpenta(methylenphosphonsäure), Diäthylentriamintetra(methylenphosphonsäure), Diäthylentriamintri(methylenphosphonsäure) und Mischungen hievon gegen Kristallisation der Aminomethylenphosphonsäure, welches das Zusetzen von nicht-oxidierender Mineralsäure zu der Lösung, bis der Anteil der genannten Mineralsäure in der stabilisierten Lösung mindestens 0,27 Grammäquivalente Mineralsäure pro 100 g Lösung beträgt und ausreichend ist, die Kristallisation bei Umgebungstemperatur zu hemmen, umfaßt, und die Konzentration der Aminomethylenphosphonsäure in der stabilisierten Lösung, ausgedrückt als der stöchiometrisch äquivalente Anteil von Diäthylentriaminpenta(methylenphosphonsäure), mindestens 10 % beträgt.

10. Verfahren gemäß Anspruch 9, wobei die Aminomethylenphosphonsäure eine Mischung von Diäthylentriaminpenta(methylenphosphonsäure), Diäthylentriamintetra(methylenphosphonsäure) und Diäthylentriamintri(methylenphosphonsäure) enthaltend 55 bis 85 %, bezogen auf das Gewicht der Mischung, Diäthylentriaminpenta(methylenphosphonsäure) ist.

11. Verfahren gemäß Anspruch 10, wobei die stabilisierte Lösung einen Anteil an Aminomethylenphosphonsäure, ausgedrückt als der stöchiometrische äquivalente Anteil an Diäthylentriaminpenta(methylenphosphonsäure), von 30 bis 55 % und 0,41 bis 0,55 Grammäquivalente Mineralsäure pro 100 g Lösung enthält.

12. Verfahren gemäß Anspruch 10 oder 11, wobei die Mineralsäure Salzsäure ist.

13. Verfahren gemäß Anspruch 11, wobei die Mineralsäure eine Mischung von Salz- und Schwefelsäure ist.

14. Verfahren gemäß Anspruch 10, wobei die stabilisierte Lösung Salzsäure als einzige nicht-oxidierende Mineralsäure, 50 bis 60 % AMP-Säure und 11,5 bis 17 % HCl enthält.

**Revendications**

1. Solution aqueuse comprenant un acide aminométhylènephosphonique choisi parmi le diéthylènetriaminepenta(acide méthylènephosphonique), le diéthylènetriaminetétra(acide méthylène phosphonique), le diéthylènetriaminetri(acide méthylène phosphonique) et leurs mélanges, la concentration de l'acide aminométhylènephosphonique dans la solution, exprimée en quantité stoechiométriquement équivalente de diéthylènetriaminepenta(acide méthylène-phosphonique), étant d'au moins 10 %, et un acide minéral non oxydant, caractérisée en ce que l'acide minéral est présent en une quantité suffisante pour empêcher la cristallisation de l'acide aminométhylènephosphonique dans la solution à température ambiante, cette quantité étant une quantité de l'acide chlorhydrique qui est au moins de 10 % en poids de la solution ou une quantité équivalente d'au moins un autre acide minéral non oxydant ou d'un mélange d'acide chlorhydrique avec un ou plusieurs autres acides minéraux non oxydant.

2. Solution selon la revendication 1, caractérisée en ce que l'acide aminométhylènephosphonique est un mélange de diéthylènetriaminepenta (acide méthylènephosphonique) de diéthylènetriaminetétra (acide méthylènephosphonique) et de diéthylènetriaminétri (acide méthylènephosphonique) contenant de 55 à 85 %, par rapport au poids du mélange, de diéthylènetriaminepenta (acide méthylènephosphonique).

3. Solution selon la revendication 2, caractérisée en ce qu'elle contient plus de 0,4 équivalent-gramme d'acide minéral pour 100 g de solution.

4. Solution selon la revendication 3, caractérisée en ce qu'elle contient une quantité d'acide aminométhylènephosphonique, exprimée en quantité stœchiométrique équivalente du diéthylènetriami-nepenta (acide méthylènephosphonique), de 30 à 55 % et de 0,41 à 0,55 équivalent-gramme d'acide minéral pour 100 g de solution.

5. Solution selon l'une quelconque des revendications 1 à 4 caractérisée en ce que l'acide minéral est l'acide chlorhydrique.

6. Solution selon la revendication 3 caractérisée en ce que l'acide minéral est un mélange d'acide chlorhydrique et d'acide sulfurique.

7. Solution selon la revendication 2 caractérisée en ce que l'unique acide minéral non oxydant est l'acide chlorhydrique et en ce qu'elle contient de 50 à 60 % d'acide aminométhylènephosphonique et de 11,5 à 17 % de HCl.

8. Solution selon la revendication 7 caractérisée en ce qu'elle contient de 50 à 55 % d'acide aminométhylènephosphonique et de 12 à 17 % de HCl.

9. Méthode de stabilisation d'une solution aqueuse d'acide aminométhylènephosphonique choisi parmi le diéthylènetriaminepenta(acide méthylènephosphonique), le diéthylènetriaminetétra(acide méthylènephosphonique), le diéthylènetriaminetri(acide méthylènephosphonique) et leurs mélanges vis-à-vis de la cristallisation de l'acide aminométhylènephosphonique, caractérisée en ce qu'elle comprend l'addition de l'acide minéral non oxydant à la solution jusqu'à ce que la quantité dudit acide minéral dans la solution stabilisée soit d'au moins 0,27 équivalent-gramme d'acide minéral pour 100 grammes de solution et soit suffisante pour empêcher ladite cristallisation à température ambiante, et la concentration de l'acide aminométhylènephosphonique dans la solution stabilisée exprimée en quantité stoechiométriquement équivalente de diéthylènetriaminepenta(acide méthylènephosphonique), étant d'au moins 10 %.

10. Méthode selon la revendication 9, caractérisée en ce que l'acide aminométhylènephosphonique est un mélange de diéthylènetriaminepenta(acide méthylènephosphonique), de diéthylènetriaminetétra(acide méthylènephosphonique), et de diéthylènetriaminetri(acide méthylènephosphonique) contenant de 55 à 85 %, par rapport au poids du mélange, de diéthylènetriaminepenta(acide méthylènephosphonique).

11. Méthode selon la revendication 10 caractérisée en ce que la solution stabilisée contient une quantité d'acide aminométhylènephosphonique exprimée en quantité stœchiométrique équivalente de diéthylènetriaminepenta (acide méthylènephosphonique), allant de 30 à 55 % et de 0,41 à 0,55 équivalent-gramme d'acide minéral pour 100 grammes de solution.

12. Méthode selon l'une quelconque des revendications 10 et 11 caractérisée en ce que l'acide minéral est l'acide chlorhydrique.

13. Méthode selon la revendication 11 caractérisée en ce que l'acide minéral est un mélange d'acide chlorhydrique et d'acide sulfurique.

14. Méthode selon la revendication 10 caractérisée en ce que la solution stabilisée contient de l'acide chlorhydrique comme seul acide minéral non oxydant, de 50 à 60 % d'acide AMP et de 11,5 à 17 % de HCl.